# EUROPÄISCHE PATENTSCHRIFT

(11) **EP 0 856 757 B1**
(45) Veröffentlichungstag und Bekanntmachung des Hinweises auf die Patenterteilung: **12.03.2003**
(21) Anmeldenummer: 97122452.2
(22) Anmeldetag: 18.12.1997
(51) Int. Cl.: G02B 6/38, G02B 6/32

(54) **LWL-Steckverbinder**
Fiber optic connector
Connecteur de fibre optique

(30) Priorität: 31.01.1997 DE 19703566; 01.09.1997 DE 19738123
(43) Veröffentlichungstag der Anmeldung: 05.08.1998
(73) Patentinhaber: Spinner GmbH Elektrotechnische Fabrik, 80335 München (DE)
(72) Erfinder: Zissler, Wolfgang, 83620 Feldkirchen-Westerham (DE)
(74) Vertreter: Prietsch, Reiner, Dipl.-Ing.

(56) Entgegenhaltungen:
- DE-A- 3 307 289
- DE-A- 4 201 771
- US-A- 4 953 944

## Beschreibung

Die Erfindung betrifft einen LWL-Zwittersteckverbinder.

Ein bekannter Steckverbinder ist der Steckverbinder EUROCOM Typ 2 der Firma ANT. Dieser Steckverbinder kann als Direktsteckverbinder oder als Linsensteckverbinder ausgebildet sein.

Direktsteckverbinder beruhen auf dem Prinzip der Stirnflächenkupplung mit den Vorteilen kleiner Abmessungen und geringer Dämpfung. Um dies zu gewährleisten, werden hohe Präzisionsanforderungen an die mechanischen Führungselemente gestellt.

Linsenstecker weiten mit Hilfe eines Linsensystems den Lichtstrahl auf ein Vielfaches auf. Dadurch kann ein radialer Versatz und wegen der annähernd parallelen Lichtstrahlen ein gewisser Abstand zwischen den Stirnflächen miteinander gekuppelter Steckverbinder toleriert werden.

Die europäische Patentanmeldung EP 0 070 980 A offenbart einen Zwitterstecker für Lichtwellenleiterkabel bei dem die zwei Steckerteile, welche über eine Überwurfmutter zusammengekuppelt werden, in der Überwurfmutter schwimmend gelagert sind, so daß sich deren beide Bezugsflächen nicht gegeneinander verwinkeln können und immer plan aufeinanderstoßen. Es sind daher keine weiteren Zentriermittel vorgesehen. In den Bezugsflächen sind auch keine Dichtungen, insbesondere kein Dichtungsring, vorgesehen, um das Eintreten von Verunreinigungen und Feuchtigkeit zu verhindern.

Bisherige LWL-Zwittersteckverbinder haben den Nachteil, daß sie nur begrenzt unter extremen Umgebungsbedingungen eingesetzt werden können, u.a. weil in die Trennebene Verunreinigungen und Feuchtigkeit eintreten können, wodurch die Kupplungs- oder Durchgangsdämpfung erheblich ansteigt.

Die Erfindung liegt die Aufgabe zugrunde, Steckverbinder in dieser Hinsicht zu verbessern.

Erfindungsgemäß ist diese Aufgabe durch den im Anspruch 1 definierten LWL-Zwittersteckverbinder gelöst.

Die beiden im gekuppelten Zustand der Steckverbinder gegeneinander anliegenden Dichtungsringe verhindern den Eintritt von Verunreinigungen oder Feuchtigkeit in die Trennebene. Grundsätzlich ist denkbar, dieses Prinzip auch bei einem sog. einkanaligen, also für nur ein LWL-Kabel ausgelegten, ansonsten jedoch gattungsgemäßen Zwittersteckverbinder anzuwenden. In der Praxis besteht hierfür jedoch kaum Bedarf.

Vorteilhaft ist der Dichtungsring in einer Ringnut aufgenommen, die mindestens eine hinterschnittene Seitenflanke hat (Anspruch 2), wodurch der Dichtungsring .unverlierbar und ausziehsicher in den Randbereich der Stirnfläche des Gehäuses eingebettet ist.

Der Dichtungsring kann ein Profildichtungsring sein (Anspruch 3).

Um die Zahl der Schraubdrehungen klein zu halten, können der Außengewindeabschnitt und entsprechend das Innengewinde des Schraubüberwurfes mindestens zweigängig sein (Anspruch 4).

Vorteilhaft sind die Ringschulter des Gehäuses und der Ringbund des Schraubüberwurfes derart profiliert, daß sie nach dem Verschrauben mit einem Gegenstecker eine Rüttelsicherung bilden (Anspruch 5). Dies verhindert ein Lösen der Verschraubung durch Vibrationen oder Stöße, denen der Steckverbinder im Einsatz häufig ausgesetzt ist. Die Profilierung kann beispielsweise in Gestalt von eingeprägten Kerben oder wellenförmigen Einbiegungen an der Ringschulter oder an dem Ringbund oder an beiden vorliegen.

Um der Ringschulter eine gewisse Elastizität zu verleihen und um sie leichter profilieren zu können, kann sie teilweise aus der in einer Radialebene liegenden Ringfläche eines schmalen, umlaufenden Steges bestehen (Anspruch 6). Damit der Steg nicht durch den Anpreßdruck des Ringbundes des Schraubüberwurfes verformt wird, sollte der Durchmesser der zwischen dem Außengewindeabschnitt und dem Steg liegenden Ringnut größer als der Innendurchmesser des Ringbundes sein.

Alternativ oder zusätzlich kann zumindest der Ringbund des Schraubüberwurfes in seiner gegen die Ringschulter des Gehäuses anliegenden Ringfläche eine Profilierung haben (Anspruch 7).

Zweckmäßig hat das Gehäuse einen das Zurückschrauben des Schraubüberwurfs in Richtung des Kabels begrenzenden Anschlag (Anspruch 8). Dieser Anschlag gewährleistet, daß der Schraubüberwurf in der zurückgeschraubten Stellung sicher festgelegt ist.

Damit in zurückgeschraubter Stellung des Schraubüberwurfes kein Schmutz in das Gehäuse eindringen kann, trägt das Gehäuse in Höhe derjenige Radialebene, in der sich der Ringbund des Schraubüberwurfes in seiner zurückgeschraubten Stellung befindet, eine den Ringspalt zwischen dem Gehäuse und dem Innendurchmesser des Ringbundes des Schraubüberwurfes abdichtenden Dichtungsring (Anspruch 9).

Das Gehäuse kann kabelseitig von der Ringschulter einen in radialer Richtung zusammendrückbaren Federring tragen, der im nicht zusammengedrückten Zustand einen Durchmesser hat, der etwas größer als der Innendurchmesser des Ringbundes des Schraubüberwurfes ist (Anspruch 10). Der Federring verhindert, daß das Innengewinde des Schraubüberwurfs gleichzeitig mit dem Außengewinde des Steckverbinders und dem Außengewinde des identischen Gegensteckverbinders im Eingriff steht.

Zweckmäßig ist die Stirnfläche des Gehäuses mittels einer Kappe abdeckbar (Anspruch 11), die vorzugsweise unverlierbar mit dem Gehäuse verbunden ist.

Vorteilhaft ist diese Kappe im wesentlichen gleichartig wie das Gehäuse des Steckverbinders ausgebildet (Anspruch 12).

Die Zentriermittel des Steckverbinders können aus einer symmetrisch zu den LWL-Faserstirnflächen ausgebildeten Anordnung aus einem von der Stirnfläche des Gehäuses abstehenden Führungsstift und einer zu diesem komplementären Führungsbohrung in dem Gehäuse bestehen (Anspruch 13).

Die LWL-Fasern des LWL-Steckverbinders können in Ferrulen enden, deren Stirnflächen weniger als der Dichtungsring über die Stirnfläche des Gehäuses überstehen und die in axialen Bohrungen des Gehäuses verschiebbar angeordnet sowie in Richtung der Stirnfläche des Gehäuses federbelastet sind (Anspruch 14).

Durch die Federbelastung der Ferrulen ist ein sicherer Kontakt zwischen den Stirnflächen korrespondierender Ferrulen gewährleistet. Die Federbelastung muß so gewählt sein, daß einerseits ein vollflächiger Kontakt zwischen den Stirnflächen der korrespondierenden Ferrulen gewährleistet ist, und andererseits diese Stirnflächen nicht beschädigt werden.

Bei einer alternativen Ausführungsform des Steckverbinders enden die LWL-Fasern in Ferrulen, die in dem Gehäuse verschiebbar und in Steckrichtung federbelastet sind und die paarweise symmetrisch zur Mittelachse des Steckverbinders über die Stirnfläche des Gehäuses vorstehen bzw. komplementär gegenüber der Stirnfläche zurückgesetzt in einer Bohrung des Gehäuses angeordnet sind. Die Zentriermittel dienen dann nur der Vorzentrierung, wogegen die Ferrulen die exakte Zentrierung der gekuppelten Steckverbinder gewährleisten.

Handelt es sich bei dem Steckverbinder um einen Linsensteckverbinder, enden die LWL-Fasern an den in dem Gehäuse liegenden Flächen von Linsen, die symmetrisch zum Mittelpunkt der Stirnfläche des Gehäuses in erstere eingebettet sind (Anspruch 16).

Bei dieser Ausführungsform des Linsensteckverbinders kann jede LWL-Faser in einer Ferrule enden, die in einer axialen Bohrung des Gehäuses verschiebbar sowie in Richtung der Linse federbelastet ist und mit ihrer Stirnfläche gegen die in dem Gehäusekörper liegende Fläche der zugehörigen Linse anliegt (Anspruch 17).

Das Gehäuse sollte aus einer korrosionsbeständigen Metallegierung bestehen (Anspruch 18), die keine gesonderte, z.B. galvanische Oberflächenbehandlung erfordert, die Toleranzprobleme schaffen würde.

In der Zeichnung sind Ausführungsbeispiele des Steckverbinders nach der Erfindung schematisch vereinfacht dargestellt. Es zeigt:
- Fig. 1: eine erste Ausführungsform mit dem identischen Gegenstecker;
- Fig. 2: eine Stirnansicht gemäß Pfeil A in Fig. 1;
- Fig. 3: den zusammendrückbaren Federring;
- Fig. 4: eine vergrößerte Darstellung des strichpunktierten Bereichs in Fig. 5;
- Fig. 5: eine zweite Ausführungsform mit dem identischen Gegenstecker;
- Fig. 6: eine dritte Ausführungsform mit dem identischem Gegenstecker;
- Fig. 7: den Steckverbinder nach Fig. 6 mit identischem Gegenstecker im gekuppelten Zustand.

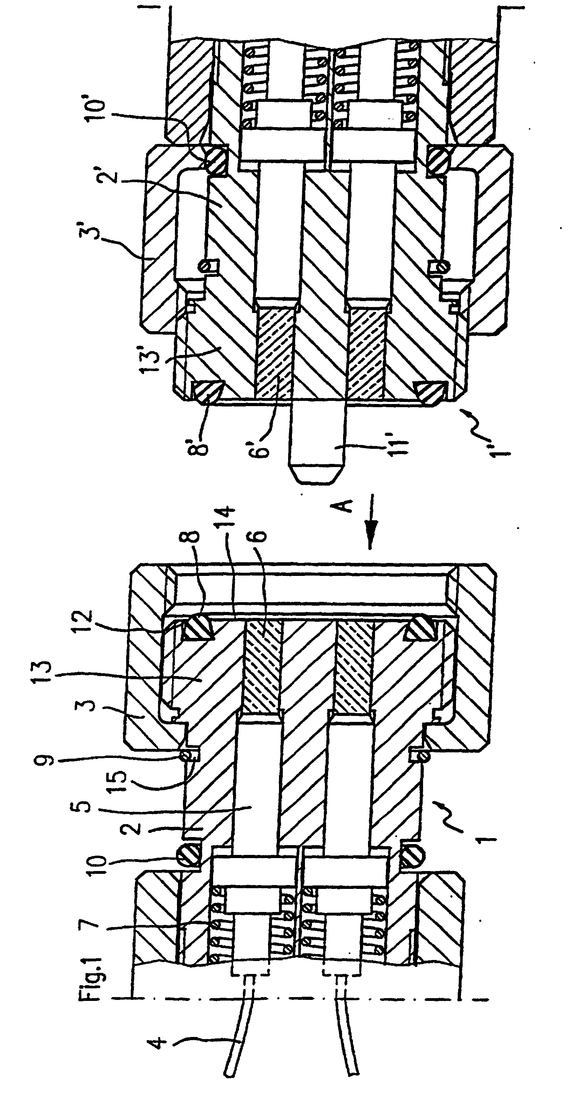

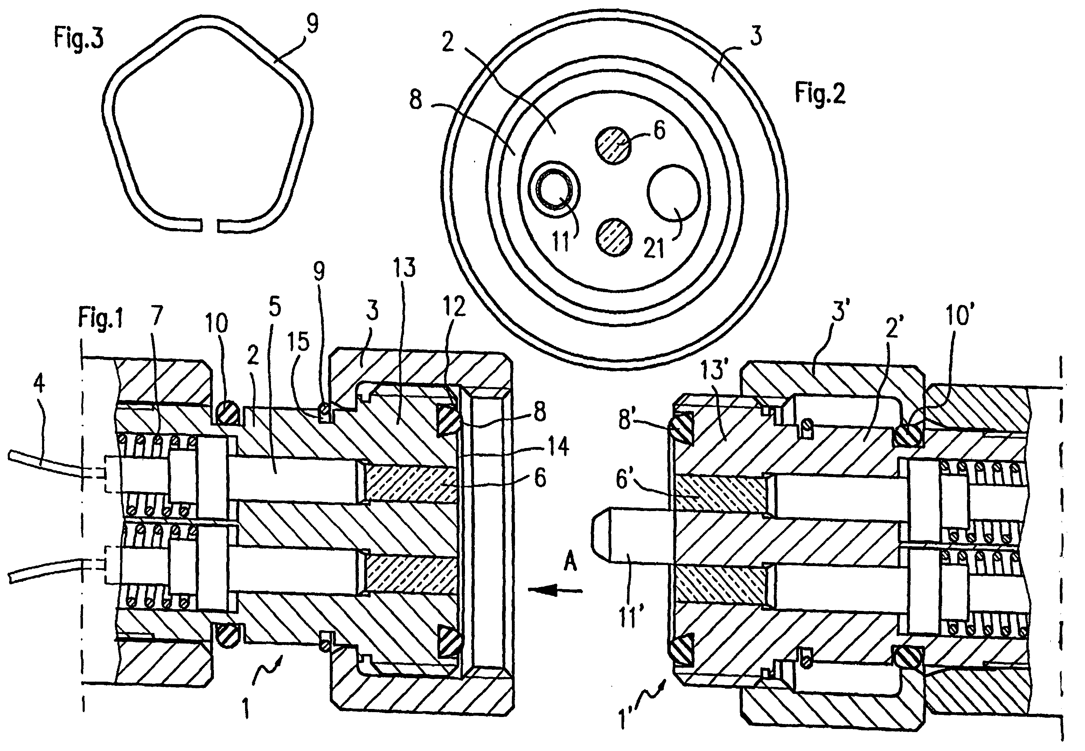

Fig. 1 zeigt einen LWL-Zwittersteckverbinder 1 mit seinem identischen Gegenstecker 1', Fig. 2 die Stirnansicht des Steckverbinders 1 gemäß Pfeil A in Fig. 1. Der Steckverbinder 1 umfaßt ein Gehäuse 2 mit axialen Bohrungen für LWL-Kabel 4, deren Faser jeweils in einer in Steckrichtung mittels einer Feder 7 7 federbelasteten Ferrule 5 endet. Auf die Ferrule folgt in Richtung der Stirnfläche 14 des Gehäuses eine Linse 6, deren außenliegende Stirnfläche zumindest etwa in der gleichen Ebene wie die Stirnfläche 14 des Gehäuses 2 liegt.

Die Stirnfläche 14 des Steckverbinders 1 hat eine Ringnut 12, deren der Steckerachse zugewandte Flanke hinterschnitten ist. Die Ringnut 12 nimmt eine Ringdichtung 8 auf. Im gesteckten Zustand dichten die Ringdichtungen 8 und 8' die Trennebene zwischen dem Steckverbinder 1 und dem identischen Gegenstecker 1' gegen Verunreinigungen und Feuchtigkeit.

Stirnseitig weist der Steckverbinder ein Zentriermittel auf, das aus einem symmetrisch zu den Linsen 6 ausgebildeten Anordnung aus einem von der Stirnfläche abstehenden Führungsstift 11 und einer zu diesem komplementären Bohrung 21 besteht. Der Gegenstecker 1' weist identisch einen Führungsstift 11' und eine komplementäre Bohrung (in diesem Schnitt nicht sichtbar) auf.

Der Steckverbinder 1 und der Gegenstecker 1' haben einen Schraubüberwurf 3 bzw. 3'. Beim Gegenstecker 1' ist der Schraubüberwurf 3' in Kabelrichtung über einen Außengewindeabschnitt 13' des Gehäuses 2' zurückgeschraubt. Der Ringspalt zwischen dem Schraubüberwurf 3' und dem Gehäuse 2' ist mittels einer Ringdichtung 10' in einer Ringnut abgedichtet. Der Schraubüberwurf 3 des Steckverbinders 1 wird nach dem Stecken auf das Gewinde 13' geschraubt.

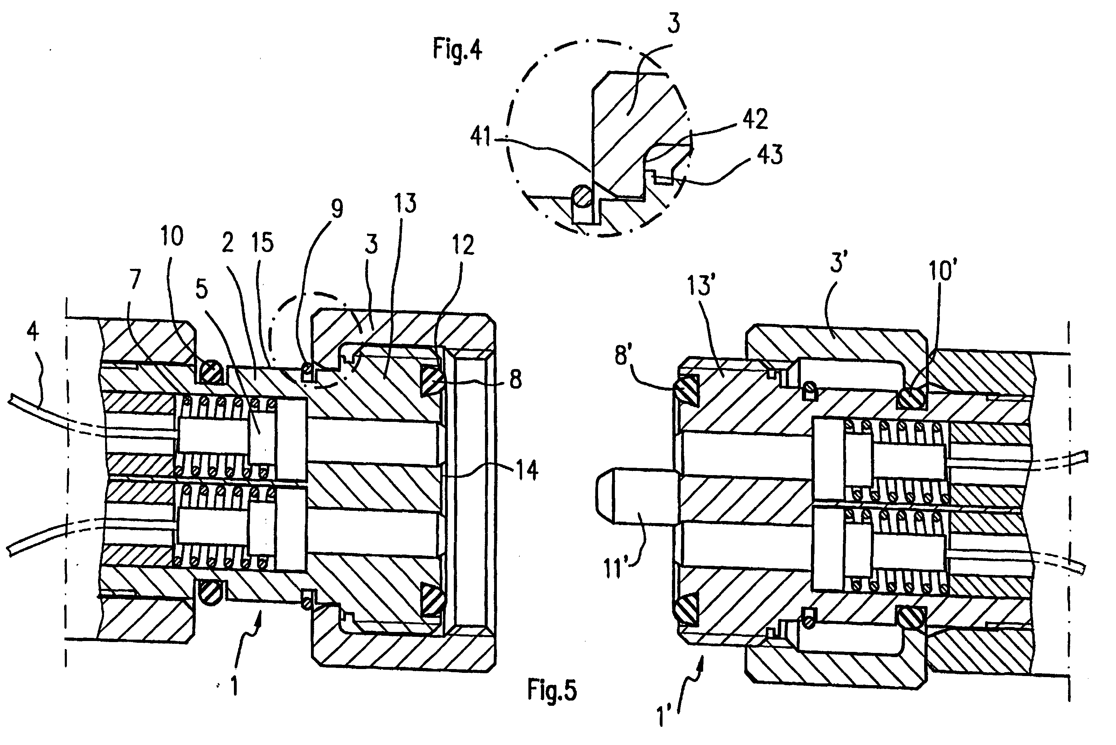

Das Gehäuse 2 trägt einen in radialer Richtung zusammendrückbaren, gemäß Fig. 3 in Umfangsrichtung profilierten Federring 9 in einer Ringnut 15. Der Federring 9 verhindert, daß das Innengewinde des Schraubüberwurfs 3 gleichzeitig auf dem Gewinde 13 des Steckverbinders 1 und auf dem Gewinde 13' des identischen Gegensteckers 1' greift.

Fig. 4 zeigt vergrößert, daß der Schraubüberwurf 3 einen Ringbund 41 aufweist, der mit einer Ringfläche 42 an einer Ringschulter des Gehäuses 1 und einem sich daran radial anschließenden Steg 43 anliegt. Die Ringfläche 42 und der Steg 43 können profiliert sein (nicht dargestellt), so daß sie nach dem Aufschrauben des Schraubüberwurfes 3 des Steckverbinders 1 auf das Gewinde 13' des Gegensteckers 1' eine Rüttelsicherung bilden.

Der Steckverbinder nach Fig. 5 unterscheidet sich von dem nach Fig. 1 dadurch, daß er keine Linsen aufweist und stattdessen die Stirnflächen der Ferrulen 5 etwa in der Stirnfläche 14 des Gehäuses 2 liegen.

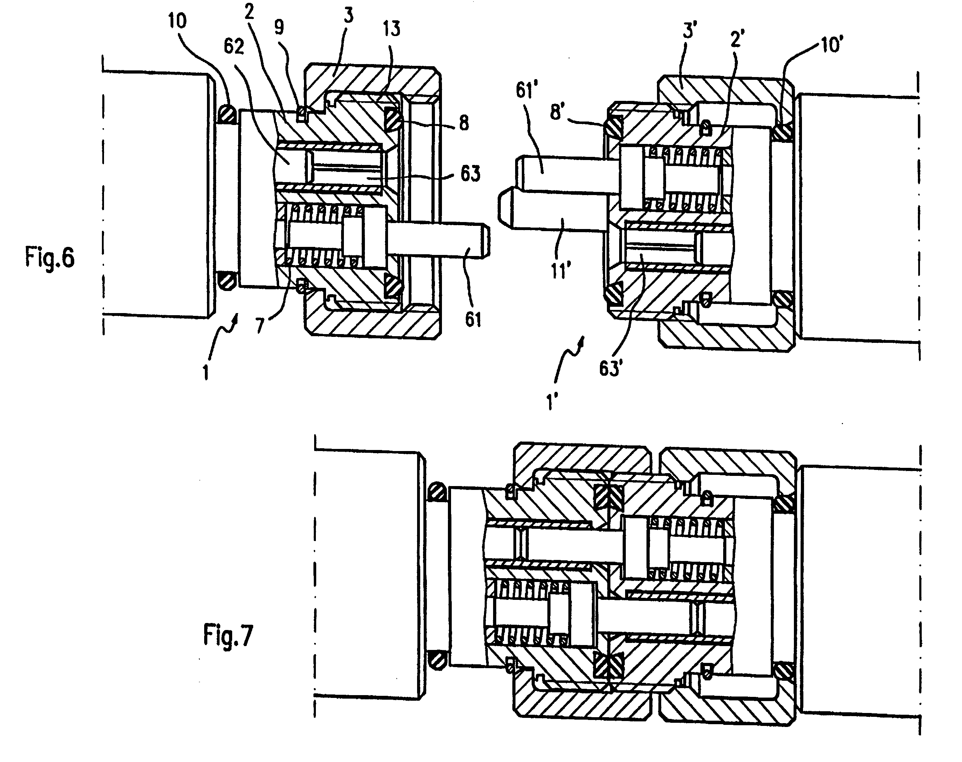

Der Steckverbinder nach Fig. 6 unterscheidet sich von dem nach Fig. 5 dadurch, daß eine erste Ferrule 61 über die Stirnfläche des Gehäuses 2 vorsteht und eine zweite Ferrule 62 gegenüber der Stirnfläche zurückgesetzt in einer Bohrung 63 des Gehäuses angeordnet ist. Die Ferrule 61 und die Bohrung 63 dienen hier gleichzeitig der Zentrierung des Steckverbinders 1 und seines identischen Gegensteckers 1'. Dabei greift die Ferrule 61 in die Bohrung 63' und die Ferrule 61' in die Bohrung 63 ein. Das Zentriermittel 11' dient der Vorzentrierung.

Fig. 7 zeigt den Steckverbinder nach Fig. 6 und seinen identischen Gegenstecker im gesteckten Zustand.

## Patentansprüche

1. LWL-Zwittersteckverbinder (1) für mindestens zwei LWL-Kabel (4), deren zur Mittelachse des Steckverbinders zumindest im wesentlichen parallel geführte LWL-Fasern in Stirnflächen enden, die punktsymmetrisch zu dem Mittelpunkt der planen Stirnfläche (14) eines zylindrischen Steckverbindergehäuses (2) liegen, das Zentriermittel (11, 21) für einen identischen Gegenstecker (1') und kabelseitig an die Stirnfläche (14) anschließend einen Außengewindeabschnitt (13) aufweist, der über eine Ringschulter in einen Abschnitt verringerten Durchmessers übergeht, auf dem verschiebbar ein Schraubüberwurf (3) mit einem Ringbund (41) sitzt, dessen Innendurchmesser kleiner als der Durchmesser des Außengewindeabschnitts (13) ist, so daß das Gehäuse (2) wahlweise über seinen eigenen Schraubüberwurf (3) oder über denjenigen (3') des Gegensteckers (1') mit letzterem verbindbar ist, wobei in den Randbereich der Stirnfläche (14) des Gehäuses (2) ein Dichtungsring (8) geringfügig vorstehend eingebettet ist.

2. Steckverbinder (1) nach Anspruch 1, bei dem der Dichtungsring (8) in einer Ringnut (12) aufgenommen ist, die mindestens eine hinterschnittene Seitenflanke hat.

3. Steckverbinder (1) nach Anspruch 1 oder 2, bei dem der Dichtungsring (8) ein Profildichtungsring ist.

4. Steckverbinder (1) nach einem der Ansprüche 1 bis 3, bei dem der Außengewindeabschnitt (13) mindestens zweigängig ist.

5. Steckverbinder (1) nach einem der Ansprüche 1 bis 4, bei dem die Ringschulter des Gehäuses und der Ringbund (41) des Schraubüberwurfes (3) derart profiliert sind, daß sie nach dem Verschrauben mit einem Gegenstecker eine Rüttelsicherung bilden.

6. Steckverbinder (1) nach einem der Ansprüche 1 bis 5, bei dem die Ringschulter teilweise aus der in einer Radialebene liegenden Ringfläche eines schmalen, umlaufenden Steges (43) besteht.

7. Steckverbinder (1) nach Anspruch 5 oder 6, bei dem zumindest der Ringbund (41) des Schraubüberwurfes (3) in seiner gegen die Ringschulter des Gehäuses anliegenden Ringfläche (42) eine Profilierung hat.

8. Steckverbinder (1) nach einem der Ansprüche 1 bis 7, bei dem das Gehäuse (2) einen das Zurückschrauben der Schraubhülse (3) in Richtung des Kabels begrenzenden Anschlag hat.

9. Steckverbinder (1) nach einem der Ansprüche 1 bis 8, bei dem das Gehäuse (2) in Höhe derjenigen Radialebene, in der sich der Ringbund (41) des Schraubüberwurfes (3) in seiner zurückgeschraubten Stellung befindet, eine den Ringspalt zwischen dem Gehäuse (2) und dem Innendurchmesser des Ringbundes (41) des Schraubüberwurfes (3) abdichtenden Dichtungsring (10) trägt.

10. Steckverbinder (1) nach einem der Ansprüche 1 bis 9, bei dem das Gehäuse (2) kabelseitig von der Ringschulter einen in Umfangsrichtung profilierten, in radialer Richtung zusammendrückbaren Federring (9) trägt, der im nichtzusammengedrückten Zustand einen Durchmesser hat, der etwas größer als der Innendurchmesser des Ringbundes (41) des Schraubüberwurfes ist.

11. Steckverbinder (1) nach einem der Ansprüche 1 bis 10, bei dem die Stirnfläche (14) des Gehäuses (2) mittels einer Kappe abdeckbar ist.

12. Steckverbinder (1) nach Anspruch 11, bei dem die Kappe gleichartig wie das Gehäuse (2) des Steckverbinders ausgebildet ist.

13. Steckverbinder (1) nach einem der Ansprüche 1 bis 12, bei dem die Zentriermittel (11, 21) aus einer symmetrisch zu den LWL-Faserstirnflächen ausgebildeten Anordnung aus einem von der Stirnfläche (14) des Gehäuses (2) abstehenden Führungsstift (11) und einer zu diesem komplementären Führungsbohrung (21) in dem Gehäuse (2) bestehen.

14. Steckverbinder (1) nach einem der Ansprüche 1 bis 13, bei dem die LWL-Fasern (4) in Ferrulen (5) enden, deren Stirnflächen weniger als der Dichtungsring (8) über die Stirnfläche (14) des Gehäuses (2) überstehen und die in axialen Bohrungen des Gehäuses verschiebbar angeordnet sowie in Richtung der Stirnfläche (14) des Gehäuses (2) federbelastet sind.

15. Steckverbinder (1) nach einem der Ansprüche 1 bis 13, bei dem die LWL-Fasern (4) in Ferrulen (61, 62) enden, die in dem Gehäuse (2) verschiebbar und in Steckrichtung federbelastet sind und die paarweise symmetrisch zur Mittelachse des Steckverbinders (1) über die Stirnfläche (14) des Gehäuses (2) vorstehen bzw. komplementär gegenüber der Stirnfläche (14) zurückgesetzt in einer Bohrung des Gehäuses (2) angeordnet sind.

16. Steckverbinder (1) nach einem der Ansprüche 1 bis 13, bei dem die LWL-Fasern (4) an den in dem Gehäuse (2) liegenden Flächen von Linsen (6) enden, die symmetrisch zum Mittelpunkt der Stirnfläche (14) des Gehäuses (2) in erstere eingebettet sind.

17. Steckverbinder (1) nach Anspruch 16, bei dem jede LWL-Faser (4) in einer Ferrule (5) endet, die in einer axialen Bohrung des Gehäuses (2) verschiebbar sowie in Richtung der Linse (6) federbelastet ist und mit ihrer Stirnfläche gegen die in dem Gehäusekörper liegende Fläche der zugehörigen Linse (6) anliegt.

18. Steckverbinder (1) nach einem der Ansprüche 1 bis 17, bei dem das Gehäuse (2) aus einer korrosionsbeständigen Metallegierung besteht.

## Claims

1. An optical waveguide sexless plug connector (1) for at least two optical waveguide cables (4) whose optical waveguide fibres which are guided at least substantially parallel to the central axis of the plug connector end in end faces which are in point-symmetrical relationship with the central point of the flat end face (14) of a cylindrical plug connector casing (2) which has centering means (11, 21) for an identical counterpart plug (1) and at the cable side adjoining the end face (14) a male screwthread portion (13) which goes by way of an annular shoulder into a portion of reduced diameter on which there is displaceably carried a screw sleeve (3) with an annular collar (41) whose inside diameter is smaller than the diameter of the male screwthread portion (13) so that the casing (2) can be connected to the counterpart plug (1') selectively by way of its own screw sleeve (3) or by way of that (3') of the counterpart plug (1'), wherein a sealing ring (8) is embedded in slightly projecting relationship into the edge region of the end face (14) of the casing (2).

2. A plug connector (1) according to claim 1 wherein the sealing ring (8) is accommodated in an annular groove (12) which has at least one side flank of an undercut configuration.

3. A plug connector (1) according to claim 1 or claim 2 wherein the sealing ring (8) is a profile sealing ring.

4. A plug connector (1) according to one of claims 1 to 3 wherein the male screwthread portion (13) has at least two flights.

5. A plug connector (1) according to one of claims 1 to 4 wherein the annular shoulder of the casing and the annular collar (41) of the screw sleeve (3) are profiled in such a way that after being screwed to a counterpart plug they form an antivibration securing means.

6. A plug connector (1) according to one of claims 1 to 5 wherein the annular shoulder partially comprises the annular surface, which is in a radial plane, of a narrow peripherally extending limb (43).

7. A plug connector (1) according to claim 5 or claim 6 wherein at least the annular collar (41) of the screw sleeve (3), in its annular surface (42) which bears against the annular shoulder of the casing, has a profiling.

8. A plug connector (1) according to one of claims 1 to 7 wherein the housing (2) has an abutment for limiting screwing of the screw sleeve (3) back in the direction of the cable.

9. A plug connector according to one of claims 1 to 8 wherein at the level of that radial plane in which the annular collar (41) of the screw sleeve (3) is disposed in its screwed-back position, the casing (2) carries a sealing ring (10) which seals off the annular gap between the casing (2) and the inside diameter of the annular collar (41) of the screw sleeve (3).

10. A plug connector (1) according to one of claims 1 to 9 wherein the casing (2) at the cable side from the annular shoulder carries a spring ring (9) which is profiled in the peripheral direction and which is compressible in the radial direction and which in the non-compressed condition is of a diameter which is somewhat larger than the inside diameter of the annular collar (41) of the screw sleeve.

11. A plug connector (1) according to one of claims 1 to 10 wherein the end face (14) of the casing (2) can be covered by means of a cap.

12. A plug connector (1) according to claim 11 wherein the cap is of a similar configuration to the casing (2) of the plug connector.

13. A plug connector (1) according to one of claims 1 to 12 wherein the centering means (11, 21) comprise an arrangement which is formed symmetrically with respect to the optical waveguide fibre end faces and which comprises a guide pin (11) projecting from the end face (14) of the casing (2) and a guide bore (21) which is complementary to the guide pin in the casing (2).

14. A plug connector (1) according to one of claims 1 to 13 wherein the optical waveguide fibres (4) end in ferrules (5) whose end faces project less than the sealing ring (8) beyond the end face (14) of the casing (2) and which are arranged slidably in axial bores in the casing and are spring-loaded in the direction of the end face (14) of the casing (2).

15. A plug connector (1) according to one of claims 1 to 13 in which the optical waveguide fibres (4) end in ferrules (61, 62) which are arranged slidably in the casing (2) and spring-loaded in the plug direction and which project in paired relationship symmetrically with respect to the central axis of the plug connector (1) beyond the end face (14) of the casing (2) or are arranged in complementary relationship set back with respect to the end face (14) in a bore of the casing (2).

16. A plug connector (1) according to one of claims 1 to 13 wherein the optical waveguide fibres (4) end at the surfaces, which are in the casing (2), of lenses (6) which are embedded symmetrically with respect to the central point of the end face (14) of the casing (2) into the former.

17. A plug connector (1) according to claim 16 wherein each optical waveguide fibre (4) ends in a ferrule (5) which is displaceable in an axial bore in the casing (2) and is spring-loaded in the direction of the lens (6) and bears with its end face against the surface, which is in the casing body, of the associated lens (6).

18. A plug connector (1) according to one of claims 1 to 17 wherein the casing (2) comprises a corrosion-resistant metal alloy.

## Revendications

1. Connecteur hermaphrodite de fibres optiques (1) pour au moins deux câbles à fibres optiques (4), dont les fibres optiques orientées au moins sensiblement parallèlement à l'axe médian du connecteur se terminent par des faces frontales agencées symétriquement par rapport au centre de la face frontale plane (14) d'un boîtier de connecteur cylindrique (2) qui comporte des moyens de centrage (11, 21) d'un contre-connecteur (1') identique ainsi que, côté câble et adjacente à la face frontale (14), une portion filetée (13) qui se prolonge via un épaulement annulaire en une portion de plus faible diamètre, sur laquelle repose avec capacité de translation un manchon fileté (3) doté d'une collerette (41), dont le diamètre interne est inférieur au diamètre de la portion filetée (13), de sorte que le boîtier (2) peut être relié sélectivement via son propre manchon fileté(3) ou via celui (3') du contre-connecteur (1') audit contre-connecteur, un anneau d'étanchéité (8) étant logé en léger débordement dans la région marginale de la face frontale (14) du boîtier (2).

2. Connecteur (1) selon la revendication 1, dans lequel l'anneau d'étanchéité (8) est logé dans une rainure annulaire (12) dont un flanc au moins présente une contre-dépouille.

3. Connecteur (1) selon la revendication 1 ou 2, dans lequel l'anneau d'étanchéité (8) est un anneau d'étanchéité profilé.

4. Connecteur (1) selon l'une des revendications 1 à 3, dans lequel la portion filetée (13) présente au moins deux filets.

5. Connecteur (1) selon l'une des revendications 1 à 4, dans lequel l'épaulement annulaire du boîtier et la collerette (41) du manchon fileté (3) sont profilés de manière à former, après vissage du manchon fileté sur un contre-connecteur, une protection contre les vibrations.

6. Connecteur (1) selon l'une des revendications 1 à 5, dans lequel l'épaulement annulaire consiste pour partie en la surface annulaire radiale d'une nervure périphérique étroite (43).

7. Connecteur (1) selon la revendication 5 ou 6, dans lequel au moins la collerette (41) du manchon fileté (3) est profilée sur sa face annulaire (42) en appui contre l'épaulement annulaire du boîtier.

8. Connecteur (1) selon l'une des revendications 1 à 7, dans lequel le boîtier (2) comprend une butée limitant le dévissage de la douille taraudée (3) en direction du câble.

9. Connecteur (1) selon l'une des revendications 1 à 8, dans lequel le boîtier (2) présente, à hauteur du plan radial dans lequel se trouve la collerette (41) du manchon fileté (3) à l'état dévissé, un anneau d'étanchéité (10) obturant la fente annulaire entre le boîtier (2) et le diamètre interne de la collerette (41) du manchon fileté (3).

10. Connecteur (1) selon l'une des revendications 1 à 9, dans lequel le boîtier (2) supporte, côté câble de l'épaulement annulaire, une rondelle élastique (9) compressible dans la direction radiale et profilée dans la direction circonférentielle, qui, à l'état non comprimé, présente un diamètre légèrement supérieur au diamètre interne de la collerette (41) du manchon fileté.

11. Connecteur (1) selon l'une des revendications 1 à 10, dans lequel la face frontale (14) du boîtier (2) peut être recouverte d'un capuchon.

12. Connecteur (1) selon la revendication 11, dans lequel le capuchon est conformé de la même façon que le boîtier (2) du connecteur.

13. Connecteur (1) selon l'une des revendications 1 à 12, dans lequel les moyens de centrage (11, 21) consistent en un agencement conformé symétriquement par rapport aux faces frontales des fibres optiques et composé d'une broche de guidage (11) en saillie sur la face frontale (14) du boîtier (2) ainsi que d'un orifice de guidage complémentaire (21) ménagé dans le boîtier (2).

14. Connecteur (1) selon l'une des revendications 1 à 13, dans lequel les fibres optiques (4) se terminent par des ferrules (5) dont les faces frontales dépassent moins de la face frontale (14) du boîtier (2) que l'anneau d'étanchéité (8) et qui sont logées mobiles en translation dans des trous axiaux du boîtier et sont chargées par ressort en direction de la face frontale (14) du boîtier (2).

15. Connecteur (1) selon l'une des revendications 1 à 13, dans lequel les fibres optiques (4) se terminent par des ferrules (61, 62) qui sont mobiles en translation dans le boîtier (2) et sont chargées par un ressort dans la direction d'enfichage et qui dépassent de la face frontale (14) du boîtier (2) par paire agencée symétriquement par rapport à l'axe médian du connecteur (1) ou qui sont agencées en retrait de manière complémentaire par rapport à la face frontale (14) dans un trou que présente le boîtier (2).

16. Connecteur (1) selon l'une des revendications 1 à 13, dans lequel les fibres optiques (4) se terminent au niveau des faces de lentilles (6) qui sont situées dans le boîtier (2), lesdites lentilles étant noyées dans la face frontale (14) du boîtier (2) symétriquement par rapport au centre de ladite face frontale.

17. Connecteur (1) selon la revendication 16, dans lequel chaque fibre optique (4) se termine par une ferrule (5) qui est mobile en translation dans un trou axial du boîtier (2) et est chargée par ressort en direction de la lentille (6), et dont la face frontale coopère en appui avec la face de la lentille associée (6) qui est située à l'intérieur du corps du boîtier.

18. Connecteur (1) selon l'une des revendications 1 à 17, dans lequel le boîtier (2) est réalisé dans un alliage métallique résistant à la corrosion.
